# EUROPÄISCHE PATENTSCHRIFT

(11) **EP 1 210 864 B1**
(45) Veröffentlichungstag und Bekanntmachung des Hinweises auf die Patenterteilung: **16.01.2008**
(21) Anmeldenummer: 01127538.5
(22) Anmeldetag: 17.11.2001
(51) Int. Cl.: A01F 25/18, A01F 25/14

(54) **Fahrbare Anordnung zur Herstellung bodenlagernder Silage**
Mobile device for producing a trench silo
Dispositif mobile pour la production d'ensilage sur le sol

(30) Priorität: 17.11.2000 DE 10057320; 10.11.2001 DE 10154892
(43) Veröffentlichungstag der Anmeldung: 05.06.2002
(73) Patentinhaber: Altenbuchner, Josef, 5122 Hochburg-Ach (AT)
(72) Erfinder: Altenbuchner, Josef, 5122 Hochburg-Ach (AT)
(74) Vertreter: Dupal, Helmut

(56) Entgegenhaltungen:
- DE-A- 1 948 931
- DE-A- 4 012 482
- DE-A- 4 022 043
- US-A- 4 567 820
- US-A- 5 396 753
- US-A- 5 421 142

## Beschreibung

Die Erfindung betrifft eine fahrbare Anordnung zur Herstellung bodenlagernder Silage, eine Stopfmaschine und einen Folienschlauch umfassend, mit den Merkmalen des Oberbegriffes des Anspruches 1.

Es sind Stopfmaschinen bekannt, bei denen das Silagegut in den Trichter einer Stopfschnecke gefüllt wird und von dieser durch eine Stopfplatte, die im rechten Winkel zu der Förderschnecke angeordnet ist in einen Folienschlauch gefüllt wird.

Eine solche Maschine ist aus der US 4,567,820 bekannt.
Bei dieser Stopfmaschine wird ein Folienschlauch, der zusammengefaltet auf einem Führungsrohr aufgesteckt ist von der Silagegutmasse abgezogen, während die Stopfmaschine gegen die Förderrichtung vom gefüllten Folienschlauch weg verfahren wird, wobei die Befüllung der Stopfmaschine laufend mit einer Beladevorrichtung mit Halm- und Blattgut beschickt, insbesonders Häcksel, das erforderlichenfalls mit weiteren Futterzusätzen, wie Kraftfutter verschiedener Art und Menge und Futterergänzungsmitteln, wie Vitamin- oder Mineralstoffanreicherungen versehen, das vorher in einer Mischeinrichtung gemischt wurde.

Nachteilig bei dieser Anordnung ist es, daß der gefaltete Folienschlauch verhältnismäßig zeitraubend aufgesteckt werden muß, der schon wegen der aufwendigen Faltung teuer ist und durch die notwendige Schlauchqualität und dessen Faltung noch weiter verteuert wird und daß es nicht möglich ist nennenswert abweichende Lumen von Folienschläuchen zu verwenden, um eine Anpassung an die räumlichen Gegebenheiten eines Lagerplatzes für den gefüllten Folienschlauch vornehmen zu können, beispielsweise bei Fahrsiloeinrichtungen mit Seiten und Endwänden und vorgegebener Länge.

Weiters bleiben bei der Entnahme von Silage Folienreste auf dem Boden liegen, die bei der weiteren Entnahme zu Störungen an dem Entnahmegerät, z.B. einem Silokamm, Anlaß geben können.

Aufgabe der Erfindung ist es, bei einer Anordnung gemäß dem Oberbegriff des Anspruches 1 die beschriebenen Nachteile zu beseitigen oder zu vermeiden und eine Stopfmaschine zu schaffen, die mit Verwendung von billiger gefalteter Silofolie, bei gleichmäßigem raschen Stopfen, es zuläßt die beiden Ende der Unterseite der Silofolie genau bis zur Unterseite der Silage zu führen und bei der eine Anordnung von Stopfmaschine mit einer Beladevorrichtung und gegebenfalls einer Mischeinrichtung zusammengestellt ist.

Diese Aufgabe wird bei der gattungsgemäßen Anordnung mit den Merkmalen des kennzeichnenden Teiles des Anspruches 1 gelöst.
Die Unteransprüche betreffen besonders vorteilhafte Ausgestaltungen der Erfindung und diese bilden ebenso wie Anspruch 1 gleichzeitig einen Teil der Beschreibung der Erfindung.

Mit der Anwendung eines Folienteilers und von beiderseits angebrachten Führungsteilen wird die Zufuhr der Folie vergleichmäßigt und Abzugsspannungsunterschiede zumindest teilweise ausgeglichen, wobei die aufgeschnittene Folie eine besonders zugspannungsarme Führung und Füllung gestattet.

Dabei wird durch die Führung der Stopfplatte mit der Unterkante nahe dem Boden, der Zug auf die Unterseite der Silofolie gemindert und das Festlegen der beiden Teile der Unterseite, je nach Querschnitt übereinander oder im Abstand voneinander unmittelbar nach der Stopfplatte und sicher erreicht.
Dabei ist ein von der Silage zu Boden gedrückter Rand der Unterseite von 20cm bis 50cm, vorzugsweise 30cm ausreichend. Die Anwendung eines Führungsrohres, das die Stopfplatte umgibt, stellt dabei die gleichmäßige Füllung und den Zusammenhalt des Gutes sicher.
Es wird mit dieser Anordnung erreicht, daß die beiden Seiten der Unterseite der Silofolie von der abgelagerten Silage niedergedrückt und gehalten werden und auf einem glatten Boden, wie Beton oder Bitumendecke oder dergleichen, vollständig abgedichtet werden.

Mit einem kurzen Stopfbereich, der mit einem kurzen Führungsrohr für die Silage versehenen Stopfplatte wird, bei nur an der Stopfschnecke angebrachten Stopfwerkzeugen, eine gute Füllung der Silofolie erzielt.

Die Stopfleistung und damit die Leistung der Anordnung steigt mit der Anbringung mehrerer Stopfwerkzeuge, die um die Stopfschnecke herum angeordnet sind. Dabei ist es vorteilhaft, bei den erforderlichen Abmessungen eines Foliensilos, drei Stopfwerkzeuge oberhalb und drei unterhalb der Stopfschnecke, im rechten Winkel zur Stopfplatte, an dieser anzubringen, was eine besonders gleichmäßige Füllung und Verdichtung der Silage in der Silofolie ergibt.

Dabei sind besonders Schneckenspindeln als Stopfwerkzeuge leistungsfähig, wobei die beiden seitlichen unteren einen größeren Durchmesser aufweisen, und die Ablage der Silage an den Seiten der Unterseite der Silofolie verstärken.
Bei dieser Anordnung von Stopfwerkzeugen ist eine längere Ausbildung des Führungsrohres von Vorteil, damit in diesem der Verdichtungsvorgang stattfindet und abgeschlossen werden kann.

Eine ebenfalls sehr wirksame Anordnung von Stopfwerkzeugen wird erhalten, wenn die unterhalb der Stopfschnecke angeordneten Schneckenspindeln durch eine angetriebene quer, waagerecht im Abstand vor der Stopfplatte angebrachte Verdichterschnecke ersetzt werden, die für eine wirksame Verteilung und Verdichtung und damit für eine gute Füllung und Auflage der Silogutes auf der Silofolie im unteren Bereich des Silos sorgt.
Dabei können die oberhalb der Stopfschnecke angebrachten Schneckenspindeln auch weggelassen werden, ohne daß dadurch eine besonders Leistungsverminderung eintritt.

Die Wirkung der Verdichterschnecke wird durch die von axial beabstandeten, in Umfangsrichtung in wenigstens einer Wendel versetzt angebrachten Förderfingern ermöglicht.

Mit der Knickung der Stopfplatte, waagerecht, vom oberen Rand der Stopfschnecke nach unten schräg zum Foliensilo geneigt ausgebildet, wird bei besonders bei leistungsfähig eingestellten Stopfwerkzeugen der Druck auf den Boden gemindert und die Füllung im oberen Bereich des Silos verbessert.

Weiter nachhaltig verbessert wird die Führung der Teile der Unterseite der Silofolie durch beiderseits je ein Führungsblech, das seitlich an der Stopfplatte, hinter dieser justierbar angeordnet befestigt ist, über das die Unterseite der Silofolie läuft, wobei diese zuerst über einen steil nach oben gerichteten Zulaufteil und dann über einem schwach nach unten geneigt ausgerichteten Ablaufteil abgezogen wird, welche beiden Teile durch einem Bogenteil ineinander übergehen oder durch die Verwendung eines Bodenrades, das auf der Silofolie abrollt und in Abrollrichtung nach außen zu angestellt ist, damit die beiden Teile des Unterteiles der Silofolie bei der Ablage zusammengehalten werden.

Um die Unterseite der Silofolie stärker nach außen zu ziehen ist in jedem Führungsblech in den Zulaufteil, dicht über dem Bogenteil, eine Öffnung als Teil einer Führungszugeinrichtung eingearbeitet. Diese besteht aus einer inneren gefederten Andruckrolle, die durch die Öffnung im Zulaufteil reicht und in der Außenebene des Zulaufteiles auf einer äußeren, angetriebenen Andruckrolle, die Unterseite der Silofolie dazwischen, läuft und eine Ausrichtung der Drehachsen aufweist, daß die Zugrichtung von oben innen nach unten außen verläuft. Dadurch wird die Silofolie an der Unterseite nach außen stärker abgezogen und die Spannung in der Folie vermindert und damit das Festlegen mit Silagegut begünstigt, wodurch eine gute Abdichtung erzielt wird.

Besonders vorteilhaft ist es, wenn bei Anwendung des Führungsbleches, dieses einstellbar angebracht ist, um eine besonders günstige Führung der Silofolie einstellen zu können.

Eine gleichmäßige Führung der Silofolie von der Wickelrolle zu dem Bodenrad wird mit einer schräg nach unten herablaufenden Führungsbahn erreicht, auf der die Andruckrollen der Führungszugeinrichtungen abrollen können.

Für die Führung des Unterteiles der Silofolie zu beiden Seiten bis unter die Stopfplatte, ist die Anbringung eines mittigen, gegen den Lauf der Folie entgegengestellten Folienteilers vorteilhaft, der bei einem Folienschlauch als Messer ausgebildet sein muß, um die Aufteilung der Silofolie zu ermöglichen und bei geteilter Folie die beiderseits gleichmäßige Führung sicherstellt.

Zur weiteren Entlastung der Silofolie von der Zugspannung und damit für die gleichmäßige Ausbringung der Silofolie ist die Anbringung einer weiteren Führungszugeinrichtung der beschriebenen Art, im Abstand oberhalb der ersten, von Vorteil.

Um den Füllquerschnitt variieren zu können, beispielsweise bei Fahrsilos mit Wänden, ist es sehr einfach möglich, das oben zweigeteilte Führungsrohr, vorzugsweise hydraulisch auseinander oder zusammen, enger zu stellen.

Die Lagerung der Silofolie in Rollenform als Wickelrolle über dem oberen Rand der Stopfplatte an Rollenträgern des Maschinenrahmens wird die Führung der Silofolie über den oberen Teil des Führungsrohres verbessert und diese wird besser auseinander geleitet, wenn beiderseits Leitrollen, schräg nach außen leitend, angebracht sind.

Besonders vorteilhaft ist die Anwendung einer mittleren Führungszugeinrichtung mit einem mittleren Führungsrad, mit dem die Einführung der Silofolie unter die Stopfplatte erleichtert wird und hohe und ungleiche Abzugspannungen der Silofolie vermindern hilft.

Zur Verbesserung des Abzuges, besonders der gefalteten Silofolie, ist die Lagerung an Trägern des Maschinenrahmens vorteilhaft und die Führung über schräg von unten außen nach oben innen geneigte Leitrollen zum Auseinanderführen der beiden Teile der Unterseite der Silofolie.

Bei unebenen Boden, wie Wiesen Schüttungsflächen oder dergleichen, ist die Verwendung einer Bodenfolie, die dann unter dem Maschinenrahmen abgewickelt und abgelegt wird, von großem Nutzen, weil die enden des Unterteiles der silofolie auf dieser abgelegt und durch den Druck der Silage abgedichtet werden.
Dabei ist die Verwendung einer Klebung von besonderem Vorteil, vor allem dann, wenn die Klebmasse unmittelbar vor dem Überrollen durch die Bodenräder aufgebracht wird, etwa durch Aufsprühen oder durch Zwischenlegen eines zweiseitigen Klebebandes oder dergleichen, womit eine haltbare und gute Abdichtung erhalten wird.

Zur Verbesserung der Abdichtung der Silofolie gegen Undichtheiten und Diffusion von Sauerstoff ist das Einpressen einer breiigen Stärkemasse, die von Düsen am Rand der Stopfplatte abgegeben wird und die unter die Folie gespritzt wird, von Vorteil, weil dadurch auch einfacher aufgebaute und damit preisgünstigere Silofolie verwendbar wird.

Besonders bei hohen Leistungen der Anordnung ist die Verwendung von wenigstens je einem Sensor für die Abzugspannung der Silofolie beiderseits am ende des Führungsrohres vorteilhaft, mit der eine elektrische Steuerung den Antrieb oder eine Bremse an den Rollen und Rädern der Führungszugeinrichtungen steuert.

Für die Verbesserung der seitlichen Formung des Silos ist die Anbringung von aufrechten angetrieben umlaufenden, auch gefederten Andrucktrommeln beiderseits am Ende des Führungsrohres geeignet.

Zur Verbesserung der Füllung und Verdichtung des Silos ist die Ausrüstung des Führungsrohres mit Rüttelorganen, vor allem seitlichen Rüttelwänden günstig.

Besonders leistungsfähig ist eine Anordnung, bei an die Stopfmaschine eine fahrbare Beladeeinrichtung mit einer Mischeinrichtung angekuppelt vorgeordnet wird.

Diese Mischeinrichtung besitzt mehrere Vorratsbehälter mit Austrags-Dosiervorrichtung aus denen gewogenen Anteile über eine Förderstrecke in eine Misch- und Förderschnecke gelangen, dort absätzig gemischt werden und über einen Beladeförderer der Beschickungvorrichtung der Stopfmaschine zum Füllen der Silofolie übergeben werden und dort von der Stopfschnecke durch die Stopföffnung in der Stopfbereich der Stopfwerkzeuge der Stopfschnecke gedrückt werden.

Die Erfindung wird nachstehend an Hand der Zeichnung einer Ausführungsform der erfinderischen Anordnung beschrieben.

Es zeigt:
- Fig.1: eine Seitenansicht der Stopfmaschine mit der abziehenden Folie, zusammengekuppelt mit der fahrbaren Mischeinrichtung;
- Fig.2: eine Frontansicht der Stopfmaschine nach Fig.1 auf die Arbeitsseite der Stopfplatte gesehen;
- Fig.3: einen Ausschnitt der Seitenansicht der Stopfmaschine in Fig.1, mit der Führungszugeinrichtung für die Silofolie.
- Fig.4: eine Seitenansicht der Stopfmaschine mit der abziehenden Folie, mit verlängertem Führungsrohr und mehreren Stopfwerkzeugen und geknickter Stopfplatte und einer abgewandelten Führungszugeinrichtung, im Schnitt, schematisch;
- Fig.5: die Frontansicht der Stopfmaschine in Fig.4 auf die Arbeitsseite der Stopfplatte, schematisch;
- Fig.6: eine Seitenansicht der Stopfmaschine in einer Abwandlung der in Fig.4 dargestellten Stopfmaschine mit einer quer angeordneten Verdichterschnecke, im Schnitt, schematisch;
- Fig.7: die Frontansicht der Stopfmaschine in Fig.6 auf die Arbeitsseite der Stopfplatte, schematisch;

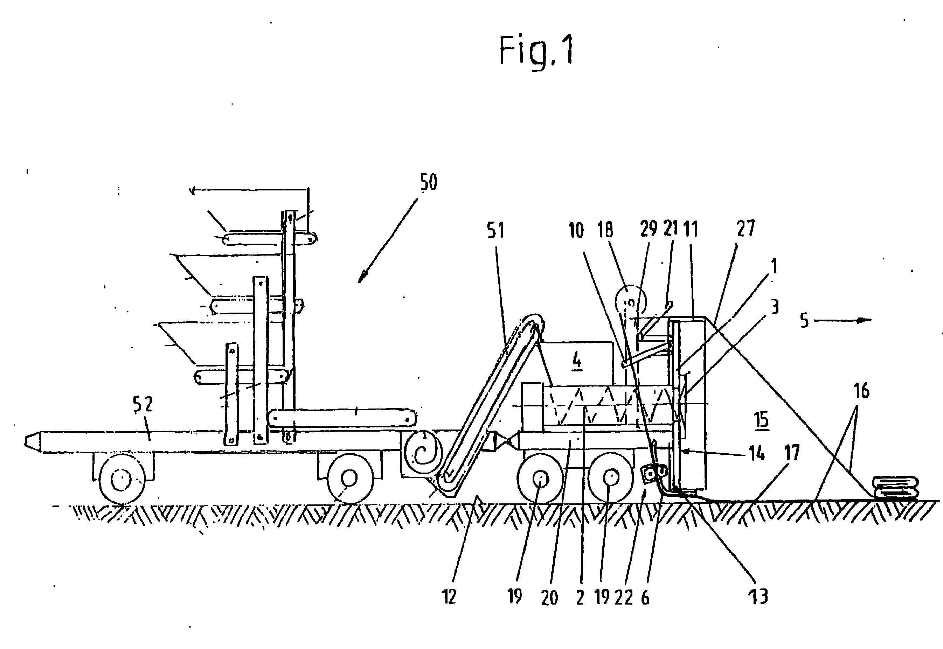

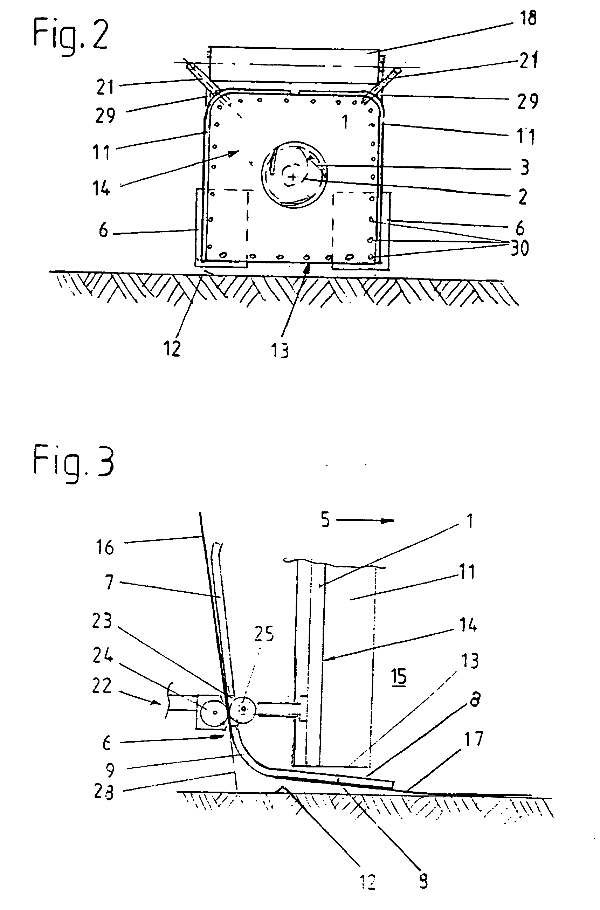

Die Stopfmachine nach Fig.1 und 2 der fahrbaren Anordnung zur Herstellung von in Silofolie 16 eingeschlossener bodenlagernder Silage, im wesentlichen aus gehäckseltem Halm- und Blattgut, umfaßt eine in Arbeitlage im wesentlichen lotrechte Stopfplatte 1, durch deren Stopföffnung mit einer FörderStopfschnecke 2 verbundene stopfwerkzeuge 3 ragen die das Silagegut von der Stopfschnecke 2 übernehmen und in Stopfrichtung 5 in den Stopfbereich 15 innerhalb der sich füllenden Silagefolie 16 befördern, wobei die Stopfmaschine auf einem mit einem Fahrwerk 19 fahrbaren Maschinenrahmen 20 aufgebaut ist.

Die Stopfschnecke läuft waagrecht ausgerichtet in einem Fördertrog und wird von einer aufgesetzten Beschickungsvorrichtung 4 mit Füllgut beaufschlagt, die ihrerseits von einem Beladeförderer 51 einer vorgeordneten, vorzugsweise auf einem gesonderten fahrbaren Rahmen 52 aufgebauten, Mischeinrichtung 50, zur Herstellung von Silagefuttermischungen, beschickt wird.

Die Silofolie 16 ist zusammengefaltet zu einer Wickelrolle 18 auf einem Rollenträger des Maschinenrahmens 20 der Stopfmaschine quer zur Stopfrichtung 5 ausgerichtet, oberhalb und hinter der Stopfplatte 1 gelagert.

Die Silofolie 16 wird über beidseitig oben hinter der Stopfplatte 1 angeordnete Leitrollen 21, die schräg nach außen fördernd angestellt sind mit die Oberseite 27 seitlich nach außen über die Oberseite eines Führungsrohres 11 geleitet, das die Stopfplatte 1 in Stopfrichtung 5 über deren Arbeitsseite 14 reichend, oben und seitlich bis an die Unterkante 13 reichend umgibt, die gerade und im Wesentlichen parallel zum Boden 12 des Silagelagers der Stopfplatte 1 verläuft.

Die unter der Unterkante 13 der Stopfplatte 1 mit der Unterseite 17 hindurchgezogene Silagefolie 16 wird mit oder ohne Spalt zwischen den Teilen der Unterseite 17 auf dem Boden 12 abgelegt und vom Silagegut auf den Boden 12 dichtend angepreßt gehalten.

Zur Verbesserung der Abdichtung der Silofolie 16 sind in Abständen eine Mehrzahl von Preßdüsen 30 um den Rand der Stopfplatte 1 herum, an deren Arbeitsseite 14 angebracht, mit denen eine breiige Stärkemasse, wie Maisschrot, innen unter die Silofolie 16 eingespritzt werden kann, die zur Abdichtung gegen Gaseintritt, vor Allem bei Undichtheiten, dient und diesen vermindert oder unterbindet.

Die Unterseite 17 der Silagefolie 16 wird nach dem Abziehen von der Wickelrolle 18 an einem Folienteiler 10 vorbeigeführt, der schräg gegen die vorbeiziehende Silagefolie 16 angestellt ist und der bei Verwendung eines Folienschlauches als Messer zum Auftrennen der Unterseite 17 in zwei Teile dient; dise gelangt dann nach unten außen, jeweils beiderseits über ein Führungsblech 6, bis zur Unterkante 13 der Stopfplatte 1.

Das Führungsblech 6 umfaßt einen aufrechten, vorzugsweise lotrechten, Zulaufteil 7 mit einem daran ansetzenden Bogenteil 9 für die Richtungsänderung des Unterteiles 17 der Silofolie 16 an den ein im wesentlichen waagrecht oder leicht nach vorne in Stopfrichtung 5 geneigt ausgerichteter Ablaufteil 8 für die Folie anschließt.

Zur Vergleichmäßigung des Abziehens der Silofolie 16 ist an dem Zulaufteil 7 des Führungsbleches 6 im unteren Bereich vor dem Bogenteil 9 eine Führungszugeinrichtung 22 angebracht, die eine Öffnung 23 in dem Zulaufteil 7 besitzt, an deren Außenebene 28, in der die Silofolie geführt ist, eine äußere Andruckrolle 24 angeordnet ist, die motorisch angetrieben, mit einer inneren Andruckrolle 25 zusammenläuft, die von der Innenseite durch die Öffnung 23 hindurch auf dieser abrollt.

Die beiden Andruckrollen 24, 25 sind gegeneinander federnd auf Konsolen des Maschinenrahmens 20 angebracht.

Die Achsen der Andruckrollen 24,25 sind zueinander parallel und parallel zur Außenebene 28 der Öffnung 23 des Zulaufteiles 7 angeordnet und schräg von innen unten nach oben außen ausgerichtet.

Durch ihre Ausrichtung ziehen die Andruckrollen 24, 25 die Silofolie 16 der darüberlaufenden Seite des Unterteiles 17 nach unten innen und ermöglichen so die Bildung einer Auflage von Silogut, die das Herausziehen der Folie oder Reißen durch zu große Spannung und während der Bewegung der Stopfmaschine entgegen die Stopfrichtung 5 für die Vergrößerung des Füllraumes in der Silofolie 16, unmöglich macht und die Herstellung einer gleichmäßigen Füllung der Silofolie 16 verbessert.

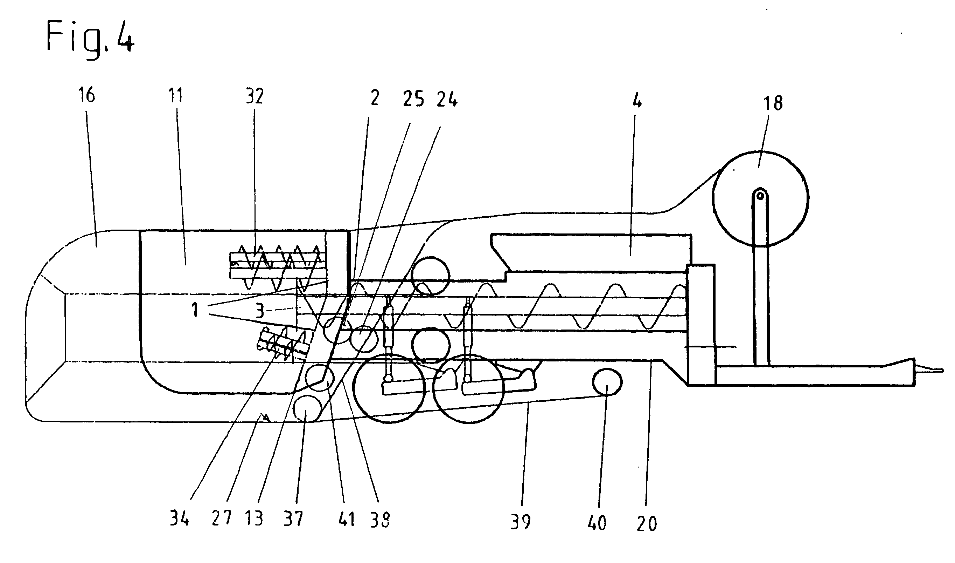

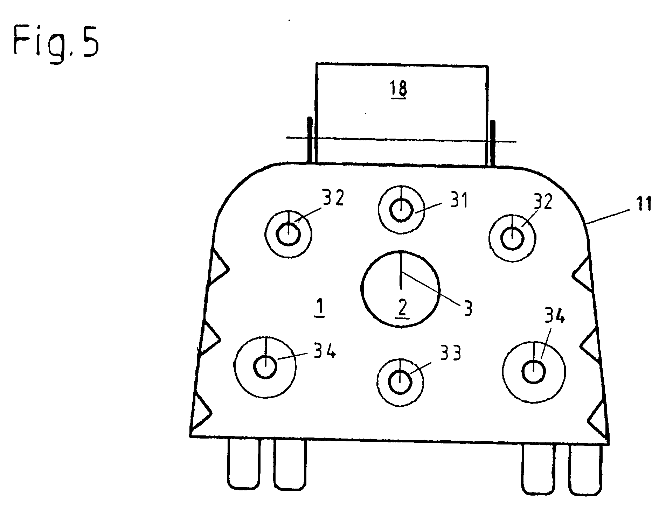

Bei der in Fig.4 und 5 dargestellten abgewandelten Bauform einer Stopfmaschine ist die Stopfplatte 1 in der Höhe der Oberkante der Stopfschnecke 2 waagerecht geknickt und der untere Teil verläuft in Richtung auf den Foliensilo schräg nach unten.

Das Führungsrohr 11, das die Stopfplatte 1 oben und seitlich umgibt ist einstückig und weist eine Länge auf die größer ist als die Höhe der Stopfplatte 1 in vertikaler Richtung.

In dem Führungsrohr 11 sind mehrere Stopfwerkzeuge 31, 32, 33, 34 um die Stopfschnecke 2 herum in der Stopfplatte, im rechten Winkel zu dieser ausragend, angetrieben gelagert angeordnet, die als Spindelschnecken ausgebildet sind und die Stopfwerkzeuge 3 der Stopfschnecke 2 bis etwa zur Hälfte der Länge des Führungsrohres 11 überragen, wobei die oberen Spindelschnecken wiederum etwa um die Hälfte länger ausgebildet sind als die unteren, die durch die schräg nach oben gerichtete Lage die auf dem Boden 12 liegende Unterseite der Silofolie 16 vom Stopfdruck entlasten.

Es ist im Abstand oberhalb der Stopfschnecke 2 und unterhalb derselben je ein Stopfwerkzeug 31 und 33 angeordnet und im Abstand beiderseits davon sind oberhalb die Stopfwerkzeug 32 und unterhalb die Stopfwerkzeuge 34 angeordnet, wobei letztere einen größeren, etwa um ein Viertel größeren Durchmesser aufweisen, der gewöhnlich ausreicht, und damit die Gutablage für das Festhalten der Unterseite 17 der Silofolie 16 verbessern.

Die Wickelrolle 18 der Silofolie 16 ist an der Maschinenoberseite vor den Anfang der Stopfschnecke angebracht und die Silofolie 16 wird von dort über eine obere Führungszugeinrichtung mit paarig angeordneten Leitrollen 21, über eine zweite Führungszugeinrichtung 22 mit paarweise angeordneten inneren Andruckrollen 25 und äußeren Andruckrollen 24 und mit mittleren Führungsrädern 41, am unteren Ende der Stopfplatte 1 des Führungsrohres 11 und über eine Führungsbahn 38 beiderseits schräg nach unten zu einem unterhalb der Stopfplatte angeordneten Bodenrad 37 geführt, das über die Oberseite 27 der beiden Enden des unteren Teiles der Silofolie abrollt und diese gegen Auseinanderziehen niederhält.

Unterhalb des Maschinenrahmens 20 ist eine Rolle 40 gelagert, von der eine Bodenfolie 39 abgezogen wird, die mittig unter der Stopfplatte 1 und dem Führungsrohr 11 zu liegen kommt, auf der die Enden der Unterseite 17 der Silofolie 16 zur Auflage kommen und von den abrollenden Bodenrädern 37 angepreßt werden.

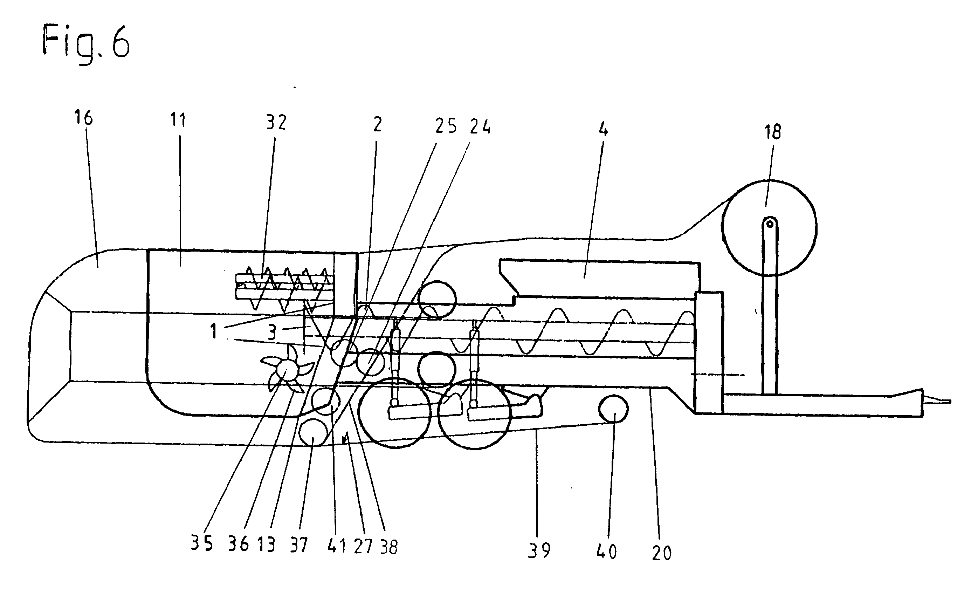

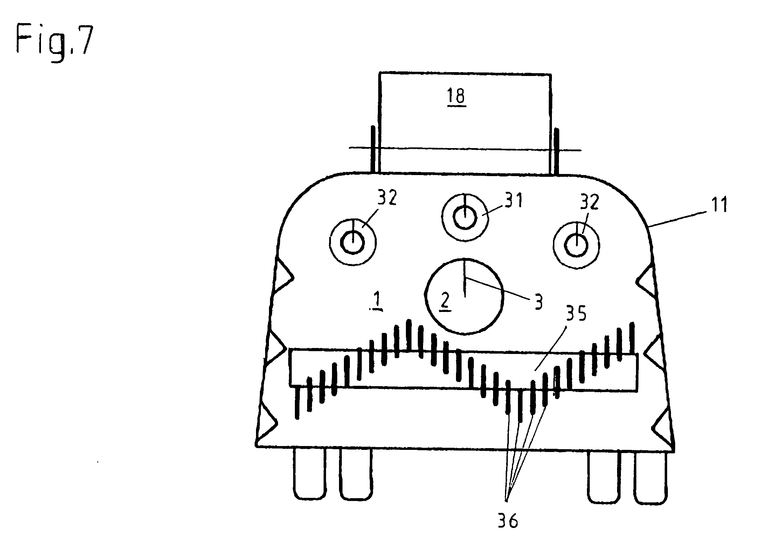

In Fig.6 und 7 ist eine Abwandlung der Stopfmaschine wie sie in Fig.4 und Fig 5 dargestellt ist, wiedergegeben.

Bei dieser Anordnung sind die Stopfwerkzeuge 32 und 34 unterhalb der Stopfschnecke 2 durch eine im Abstand quer und waagerecht zur Stopfplatte 1 angeordnete angetriebene Verdichterschnecke 35 ersetzt, die mit axial voneinander beabstandeten und in Umfangsrichtung in einer Wendel versetzt angeordneten Förderfingern 36 versehen ist.

Es ist mit dieser Anordnung sogar möglich die Stopfwerkzeuge 31, 32 oberhalb der Stopfschnecke 2 wegzulassen.

### Bezugszeichenliste

- 1: Stopfplatte der Stopfmaschine
- 2: Stopfschnecke der Stopfmaschine
- 3: Stopfwerkzeuge der Stopfschnecke 2
- 4: Beschickungseinrichtung der Stopfschnecke 2
- 5: Stopfrichtung der Stopfmaschine
- 6: Führungsblech für die Unterseite 17 der Silofolie 16
- 7: Zulaufteil des Führungsbleches für die Silofolie 16
- 8: Ablaufteil des Führungsbleches 6 für die Silofolie 16
- 9: Bogenteil des Führungsbleches 6
- 10: Folienteiler für die Unterseite 17 der Silofolie 16
- 11: Führungsrohr der Stopfplatte 1
- 12: Boden
- 13: Unterkante der Stopfplatte 1
- 14: Arbeitsseite der Stopfplatte 1
- 15: Stopfbereich an der Arbeitsseite 14 vor der Stopfplatte 1
- 16: Silofolie
- 17: Unterseite der Silofolie 16
- 18: Wickelrolle der Silofolie 16
- 19: Fahrwerk des Maschinenrahmens 20
- 20: Maschinenrahmen der Stopfmaschine
- 21: Leitrollen für den oberen Teil der Silofolie 16
- 22: Führungszugeinrichtung des Führungsbleches 6
- 23: Öffnung im Zulaufteil 7 des Führungsbleches 6
- 24: äußere Andruckrolle der Führungszugeinrichtung 22
- 25: innere Andruckrolle der Führungszugeinrichtung 22
- 27: Oberseite der Silofolie 16
- 28: Außentangentialebene des Zulaufteiles 7 des Führungsbleches 6
- 29: Rollenträger der Wickelrolle 18
- 30: Preßdüsen der Stopfplatte 1
- 31: Stopfwerkzeug, mittig oberhalb der Stopfschnecke 2
- 32: Stopfwerkzeug, seitlich oberhalb der Stopfschnecke 2
- 33: Stopfwerkzeug, mittig unterhalb der Stopfschnecke 2
- 34: Stopfwerkzeug, seitlich unterhalb der Stopfschnecke 2
- 35: Verdichterschnecke, waagerecht querliegend vor der Stopfplatte 1
- 36: Förderfinger der Verdichterschnecke 35
- 37: Bodenrad
- 38: Führungsbahn für die Silofolie 16
- 39: Bodenfolie
- 40: Rolle der Bodenfolie 39
- 41: mittleres Führungsrad für die Silofolie 16

- 50: Mischeinrichtung
- 51: Beladeförderer
- 52: Rahmen der Mischeinrichtung 50

## Patentansprüche

1. Fahrbare Anordnung zur Herstellung lagerfähig in Silofolie eingeschlossener bodenlagernder Silage, insbesonders von Silagegemisch, mit einer Stopfmaschine mit einer waagrechten Stopfschnecke (2), die das Silagegut durch die Öffnung einer aufrechten Stopfplatte (1) hindurchfördert, das von einer vorgeordneten Beschickungsvorrichtung (4) mit einem Schneckentrog aufgenommen wird, in den es von einem Beladegerät (51), insbesondere einem Beladeförderer, gefüllt wird, wobei die Stopfmaschine (1) die gefaltete Schlauchfolie (16) trägt, die die Stopfplatte (1) umgebend abgezogen und bei gleichzeitigem Vorschub der Stopfmaschine, mit dem Silagegut gefüllt auf dem Boden (12) abgelagert wird und die Stopfplatte (1) eine zum ebenen Boden (12) parallele Unterkante (13) aufweist, mit der sie in Arbeitslage nahe am Boden (12) geführt ist und von einem Führungsrohr (11) seitlich und oben umgeben ist, das an der Stopfplatte (1) beginnend in den Stopfbereich (15) reicht, **dadurch gekennzeichnet, daß** an der, der Arbeitsseite (14) der Stopfplatte (1) abgewandten Seite ein Folienteiler (10) oben mittig, der Unterseite (17) der Silofolie (16) entgegen gerichtet angeordnet ist und an der Unterkante (13) der Stopfplatte (1) ein Führungsteil angeordnet ist, das an dem Führungsrohr (11), beiderseits angebracht ist, über das die Unterseite (17) der unten geschlitzten Silofolie (16) geführt ist, die an der Unterseite (17) aufgeschnitten, als Wickelrolle (18) oberhalb und/oder hinter der Stopfplatte (1) gelagert ist, wobei die beiden Seiten der Unterseite (17) der Silofolie (16) unter der in diese gestopfte Silage auf dem Boden (12) liegen.

2. Fahrbare Anordnung nach Anspruch 1, **dadurch gekennzeichnet, daß** das Führungsrohr (11) von der die Stopfplatte (1) seitlich und oben umgeben ist, an dieser beginnend, über ein im Verhältnis zur Höhe derselben kurzes Stück von einem Viertel bis zu der Hälfte in den Stopfbereich (15) reicht, wenn über die Stopfplatte (1) nur die Stopfwerkzeuge (3) einer an dieser im wesentlichen endenden Stopfschnecke (2) hervorragen.

3. Fahrbare Anordnung nach Anspruch 1, **dadurch gekennzeichnet, daß** die Stopfschnecke (2) der Stopfplatte (1) von mehreren Stopfwerkzeugen (31, 32, 33, 34) umgeben ist, die angetrieben sind und vorzugsweise oberhalb und unterhalb, insbesondere je ein Stopfwerkzeug (31, 33) mittig und zwei weitere Stopfwerkzeuge (32, 34) jeweils seitlich angeordnet und im rechten Winkel zur Stopfplatte (1) ausgerichtet angeordnet sind.

4. Fahrbare Anordnung nach Anspruch 3, **dadurch gekennzeichnet, daß** die Stopfwerkzeuge (31, 32, 33, 34) als Schneckenspindeln ausgebildet sind, von denen die seitlichen unteren Schneckenspindeln (34) einen größeren Durchmesser und die oberen Schneckenspindeln 31, 32) eine größere Länge als die übrigen Schneckenspindel (31, 32, 33 bzw. 33, 34) aufweisen.

5. Fahrbare Anordnung nach Anspruch 3 oder 2, **dadurch gekennzeichnet, daß** das Führungsrohr (11) von der die Stopfplatte (1) seitlich und oben umgeben ist, an dieser beginnend, über ein im Verhältnis zur Höhe derselben langes Stück von etwa nahezu dem Einfachen bis zum Doppelten der Höhe in den Stopfbereich (15) reicht, wenn über die Stopfplatte (1) wenigstens ein Stopfwerkzeug (31 oder 32 oder 33 oder 34) über einen erheblichen Teil der Länge des Führungsrohres (11), insbesonders bis über die Hälfte, in das Führungsrohr (11) reichend ausgebildet ist oder darin angeordnet ist.

6. Fahrbare Anordnung nach Anspruch 1, 2 oder 5, **dadurch gekennzeichnet, daß** im Führungsrohr (11) quer und waagerecht, im Abstand vor der Stopfplatte (1), der Höhe nach unterhalb der Stopfschnecke (2), ein Stopfwerkzeug in Form einer angetriebenen Verdichterschnecke (35) angebracht ist.

7. Fahrbare Anordnung nach Anspruch 6, **dadurch gekennzeichnet, daß** die Verdichterschnecke (35) in Umfangsrichtung versetzt mehrere Förderfinger (36) trägt, die in Achsrichtung der Verdichterschnecke (35) in Abständen angeordnet, wendelartig versetzt angebracht sind.

8. Fahrbare Anordnung nach einem der Ansprüche 1 bis 3 oder 5 oder 6, **dadurch gekennzeichnet, daß** die Stopfplatte (1) oberhalb der Stopfschnecke (2) waagerecht und von dort nach unten schräg nach vorne in einem steilen Winkel geneigt angebracht ist.

9. Fahrbare Anordnung nach einem der Ansprüche 1, 2, 5 oder 6, **dadurch gekennzeichnet, daß** an dem Führungsrohr (11) beiderseits als Führungsteil je ein Führungsblech (6) befestigt ist, über das an der Unterseite die Unterseite (17) der unten geschlitzten Silofolie (16) geführt ist oder als Führungsteil je ein Bodenrad (37) angeordnet ist, das auf der Silofolie (16) abrollt und in Abrollrichtung, vorzugsweise nach außen zu, angestellt ist.

10. Fahrbare Anordnung nach einem der Ansprüche 1 oder 9, **dadurch gekennzeichnet, daß** jeder Führungsteil eine Führungszugeinrichtung (22) aufweist, bei dem Führungsblech (6) bestehend aus einer, vorzugsweise zum Außenrand des Führungsbleches (6) hin versetzt und nahe über dem Bogenteil (9) angeordneten, in den Zulaufteil (7) eingearbeiteten Öffnung (23), durch die von außen und von innen je eine Andruckrolle (24 und 25) aufeinander abrollend angeordnet an Konsolen angebracht sind, von denen wenigstens eine, elektrisch oder hydraulisch, angetrieben ist und deren Achsen parallel zueinander und im wesentlichen parallel zum Zulaufteil (7) des Führungsbleches des Führungsteiles (6) von unten innen schräg nach oben außen ausgerichtet sind und deren Berührungsebene in der Außenebene (28) der Öffnung (23) liegt und bei einem Bodenrad (37) die Führungszugeinrichtung als zumindest eine innenliegende angetriebene Andruckrolle (24), von unten innen schräg nach oben außen ausgerichtet, am unteren Rand des Führungsrohres (11)vorgesehen ist.

11. Fahrbare Anordnung nach einem der Ansprüche 1, 9 oder 10, **dadurch gekennzeichnet, daß** der als Führungsblech (6) ausgebildete Führungsteil an der Seite des Führungsrohres (11), hinter der Stopfplatte (1) höhenverstellbar und seitlich verstellbar angebracht ist und einen im wesentlichen vertikal oder parallel zu dieser angeordneten Zulaufteil (7) aufweist, der über einen Bogenteil (9) in einen unter die Unterkante (13) der Stopfplatte (1) reichenden Ablaufteil (8) aufweist, über den die beiden Seiten der an der Unterseite (17) aufgeschnittenen Silofolie (16) gezogen wird.

12. Fahrbare Anordnung nach Anspruch 1, **dadurch gekennzeichnet, daß** von der Wickelrolle (18) zu dem Bodenrad (37) am unteren Ende der Stopfplatte (1) eine schräg nach unten und in Richtung Stopfplatte (1) herablaufende Führungsbahn (38), als Auflage für die Folie (16) angebracht ist.

13. Fahrbare Anordnung nach Anspruch 1, **dadurch gekennzeichnet, daß** ein Folienteiler (10), der oben mittig, der Unterseite (17) der Silofolie (16) schräg geneigt von innen entgegen gerichtet angeordnet ist, aus einem Messer besteht, das die als Schlauch gerollte Silofolie (16) beim Abziehen an der Unterseite (17) aufschneidet.

14. Fahrbare Anordnung nach einem der Ansprüche 1 oder 12, **dadurch gekennzeichnet, daß** zwischen der Wickelrolle (18) und der Stopfplatte (1), oberhalb und seitlich nach außen versetzt an dem dann nach hinten gezogenen Führungsrohr (11), an jeder Seite eine zweite Führungszugeinrichtung für den oberen Bereich der Silofolie (16) angebracht ist.

15. Fahrbare Anordnung nach einem der Ansprüche 1, 2, 5, 6 oder 9 bis 11 und 13, **dadurch gekennzeichnet, daß** das Führungsrohr (11) oben, im wesentlichen mittig geteilt ist und beide Teile an der Stopfplatte (1) oder am Maschinenrahmen (20) der Stopfmaschine seitlich, im rechten Winkel zur Stopfrichtung (5), vorzugsweise mit hydraulischen Stellmitteln, verschiebbar gelagert sind.

16. Fahrbare Anordnung nach einem der Ansprüche 1, 12 oder 14, **dadurch gekennzeichnet, daß** die Wickelrolle (18) der Silofolie (16) in einem Rollenträger (29) des Maschinenrahmens (20) gelagert ist und der Wickelrolle (18) beiderseits, in deren Randbereich, Leitrollen (21) für die abgezogene Silofolie (16) nachgeordnet sind.

17. Fahrbare Anordnung nach einem der Ansprüche 1, 3, 5 oder 6, **dadurch gekennzeichnet, daß** beiderseits der Stopfplatte (1) als zusätzliche Führungszugeinrichtung je ein mittleres, angetriebenes Führungsrad (41), vorzugsweise an der Seitenkante der Getriebekästen, unter einem Winkel zur Zugrichtung der Silofolie (16), für die Einführung derselben, angeordnet ist.

18. Fahrbare Anordnung nach einem der Ansprüche 1, 9, 11 bis 14 oder 16 bis 17, **dadurch gekennzeichnet, daß** eine Bodenfolie (39), mittig unter und zwischen dem Fahrwerk (19) geführt, unter der Stopfplatte (1) abgelegt wird, die von einer Rolle (40) abgezogen wird, die unter dem Maschinenrahmen (20) gelagert ist und auf der die beiden Seitenenden der Unterseite (17) der Silofolie (16) aufliegen und von den Bodenrädern (37) überrollt werden

19. Fahrbare Anordnung nach Anspruch 18 und einem der Ansprüche 1, 9, 11 bis 14 oder 16 bis 17, **dadurch gekennzeichnet, daß** die Unterteile (17) der Silofolie (16) und die Oberseite der Bodenfolie (39) mit einer, zumindest vor dem Überrollen hergestellten, Klebeschicht versehen sind.

20. Fahrbare Anordnung nach einem der Ansprüche 1, 3, 5, 6 oder 17, **dadurch gekennzeichnet, daß** an der Arbeitsseite (14) der Stopfplatte (1), an deren Rand in Abständen Preßdüsen (30), für das Einpressen einer stärkehaltigen Abdeckmasse, vorzugsweise breiiger Maisschrot, direkt unter die Silofolie, angebracht sind.

21. Fahrbare Anordnung nach Ansprüche 10, 16 und 17, **dadurch gekennzeichnet, daß** am Ende des Führungsrohres (11), vorzugsweise seitlich, beiderseits je ein Sensor für die Abzugsspannung der Silofolie (16) angebracht ist, die über eine elektrische Steuerung den Antrieb oder eine Bremse für das Abrollen, die oberen Leitrollen (21) und/oder die mittleren Führungsräder (41) und/oder die unteren Andruckrollen (24 und/oder 25) in Abhängigkeit von der Abzugsspannung der Silofolie (16) verzögern.

22. Fahrbare Anordnung nach einem der Ansprüche 1, 2, 5, 6 oder 9 bis 11, 13 oder 21 bis 23 , **dadurch gekennzeichnet, daß** am Ende des Führungsrohres (11) beiderseits je eine aufrechte, vorzugsweise gefederte und/oder angetriebene Andrücktrommel (42) gelagert ist.

23. Fahrbare Anordnung nach Anspruch 23, **dadurch gekennzeichnet, daß** das Führungsrohr (11) mit Rüttelorganen, insbesondere mit seitlichen Rüttelwänden, versehen ist.

24. Fahrbare Anordnung nach einem der Ansprüche 15, 16 oder 18, **dadurch gekennzeichnet, daß** der Maschinenrahmen (20) der Stopfmaschine mit dem fahrbaren Rahmen (52) der vorgeordneten Mischeinrichtung (50) zusammenkuppelbar eingerichtet ist auf dem der Beladeförderer (51) angebracht ist und der Rahmen (52) und der Maschinenrahmen (20), von einem ankoppelbaren Zugfahrzeug, zusammen verfahrbar und antreibbar sind.

## Claims

1. Movable grouping system for the production of a silage storable on the ground and locked in plastic wraps, in particular of a silage mixture. The system works with a stuffing machine containing a horizontal stuffing worm (2) which is conveying the silage material through the entrance of an erect standing stuffing plate (1). The material is picked up in a pre-arranged input appliance (4) with a worm through, filled in by a loading device (51), particularly by a loading conveyor where the stuffing machine (1) is carrying the folded silage-foil (16) off from the surrounded stuffing plate (1). The folie is filled with the silage material during simultaneous feed of the stuffing machine and deposited on the ground (12) and the stuffing plate (1) shows a parallel lower edge (13) to the level ground (12) with which it is handled near the ground (12) during work and surrounded by a guide tube (11) laterally and on the top beginning at the stuffing plate (1) and reaching to the stuffing area (15).It is marked by the fact that a folie-divider (10) on the reverse side of the working side (14), and the stuffing plate (1) is concentric on the top, arranged opposite to the underside (17) of the silage-folie (1.6) and a leading art on the lower edge (13) of the stuffing plate (1) which is mounted on both sides of the guide tube (11; over it is led the underside (17) of the silage-folie (16) slit below. The silage-folie (16) is cut open on the underside (17) and positioned as a wrap cylinder (18), above and/or behind the stuffing plate (1), where both sides of the underside (17) of the silage-folie (16) are lying on the ground (12) under the stuffed-in silage material.

2. Movable grouping system according to claim 1, marked by the fact that the guide tube (11) from which the stuffing plate (1) is surrounded laterally and on the top, beginning at the stuffing plate (1) and reaching over a short distance of a quarter up to the half, in relation to the level of it, into the stuffing area (15), when above the stuffing plate (1) only rise the stuffing implement (3) of an stuffing worm (2), normally ending on the stuffing plate (1).

3. Movable grouping system according to claim 1, marked by the fact that the stuffing worm (2) of the stuffing plato (1) is surrounded by several stuffing implements (31, 32, 33, 34), which are driven and preferably arranged on the top and at the bottom especially one stuffing implement (31, 33) each concentric and two further stuffing implements (32, 34) laterally each and adjusted at right angles to the stuffing plate (1).

4. Movable grouping system according to claim 3, marked by the fact that the stuffing implements (31, 32, 33, 34) are formed as worm spindles among which the worm spindles (34) at the bottom have a greater diameter and the upper worm spindles (31, 32) a greater length than the rest of the worm spindles (31, 32, 33 resp. 33, 34).

5. Movable grouping system according to claim 1 or 2, marked by the fact that the guide tube (11), from which the stuffing plate (1) is surrounded laterally and on the top, begins at the stuffing plate (1) and reaches over a distance, in relation to the level, of about a single up to the double into the stuffing area (15), if above the stuffing plate (1) only one of the stuffing implements (31 or 32 or 33 or 34) towers above a considerable part of the length of the guide tube (11), particularly above the half into the guide tube (11) or is arranged therein.

6. Movable grouping system according to the claims 1, 2 or 5, marked by the fact that in the guide tube (11) diagonally and horizontally in distance from the stuffing plate (1), along the height underneath the stuffing worm (2), a stuffing implement is mounted in form of a driven compression worm (35).

7. Movable grouping system according to claim 6, marked by the fact that the compression worm (35) carries several feed fingers (36) staggered in direction to the circumference that are arranged in direction of the axe of the compression worm (35), staggered in distances spiral shaped.

8. Movable grouping system according to one of the claims 1 up to 3 or 5 or 6, marked by the fact that the stuffing plate (1) above the stuffing worm (2) is mounted horizontally and from there diagonally down-ward bent into a steep angle.

9. Movable grouping system according to one of the claims 1, 2, 5 or 6, marked by the fact that on the guide tube (11) on both sides a guide sheet (6) each is fixed as a guide part. Over it is guided at the bottom the underside (17) of the silage-folie (16) slit at the bottom or arranged as a guide part a ground wheel (37) each that unrolls on the silage-folic (16) and is positioned in direction of unrolling, mainly outward.

10. Movable grouping system according to one of the claims 1 or 9, marked by the fact that each guide part shows a guide pull adjustment (22) at which guide sheets (6) consisting of one entrance (23), mainly staggered to the external edge of the guide sheet (6) and arranged neor over the bend part (9), incorporated in the flow-in part (7). In this entrance there are mounted on consoles from outside and inside a pressing cylinder each (24 and 25) which are arranged rolling to another. At least one of them is run on electricity or has a hydrodynamic drive and their axes are adjusted parallel to another and mainly parallel to the flow-in part (7) of the guide sheet of the guide part (6) from below inside diagonally to the top outside and their contact level in the external level (28) of the entrance (23). At the ground wheel (37) the guide pull adjustment (22) is foreseen at least as a inside lying driven pressing cylinder (24), adjusted from below inside diagonally to the top outside, on the lower edge of the guide tube (11).

11. Movable grouping system according to the claims 1, 9 or 10, due to the fact that the guide part, formed as a guide sheet (6), laterally on the guide tube (11) is mounted behind the stuffing plate (1) height-adjustable and shows a flow-in part (7), mainly arranged vertically or parallel to it that shows over a bend part (9) an outlet part (8) reaching under the lower edge (13) of the stuffing plate (1). Over the outlet part (8) are wound up both sides of the silage-folie (16), cut open at the underside (17).

12. Movable grouping system according to claim 1, due to the fact that there ist mounted a guide track (38) leading from the warp cylinder (18) to the ground wheel (37) at the lower end of the stuffing plate (1) aguide track (38) down in direction of the stuffing plate (1), mounted as an overlay for the silage-folie (16).

13. Movable grouping system according to claim 1, marked by the fact that a folie-divider (10) that is arranged at the top concentric inclined to the underside (17) of the silage-folie (16) and from inside contrarily turned off, consists of a blade that cuts open the silage-folie (16), rolled as a tube, during the pull off on the underside (17).

14. Movable grouping system according to one of the claims 1 or 12, marked by the fact that there is mounted a second guide pull adjustment (22) between the wrap cylinder (18) and the stuffing plate (1), staggered above and laterally to the outside, on the guide tube (11) pulled to the back, for the upper area of the silage-folie (16).

15. Movable grouping system according to one of the claims 1, 2, 5, 6 or 9 to 11 und 13, marked bay the fact that the guide tube (11) on the top is divided concentric and that both parts on the stuffing plate (1) or on the machine frame (20) of the stuffing machine laterally, at right angles to the direction of stuffing/feeding (5), mainly with hydraulic set devices, are supported adjustably.

16. Movable grouping system according to one of the claims 1, 12 or 14, marked by the fact that the wrap cylinder (18) of the silage-folie (16) is mounted in a wheel support (29) of the machine frame (20) and that guide rolls (21) for the pulled off silage-folie (16) are subordinate on both sides of the warp cylinder (18) in its edge area.

17. Movable grouping system according to one of the claims 1, 3, 5 or 6, marked by the fact that on both sides of the stuffing plate (1) a driven middle guide wheel (41) each, as an additional guide, pull adjustment (22), is arranged, preferably on the side edge of the gearboxes under an angle in direction to the pulling of the silage-folio (16; to insert it.

18. Movable grouping system according to the claims 1, 9, 11 to 14 or 16 to 17, marked by the fact that a ground-folle (39), concentric led under and between the chassis (19), is deposited under the stuffing plate (1) which is taken off by a roll (40) that is mounted under the machine frame (20) and lies on the both side-ends of the underside (17) of the silage-folie (16) and is over rolled by the ground wheels (37).

19. Movable grouping system according to claim 1, 9, 11 to 14 or 16 to 17, marked by the fact that the underside (17) of the silage-folie (16) and the upper side of the ground-folie (39) is provided with an adhesive layer, produced at least before the over rolling.

20. Movable grouping system according to claim 1, 3, 5, 6 or 17, marked by the fact that on the scope of work (14) of the stuffing plate (1) on its edge are mounted at intervals press nozzles (30) for the pressing in of a starchy cover-mass, mainly mushy corn cobs crushed directly below the silage-folie (16).

21. Movable grouping system according to claim 10, 16 and 17, marked by the fact that at the end of the guide tube (11), preferentially laterally, one sensor each is mounted on both sides for the drawing-off tension of the silage-folie (16) that slows down by an electric control the drive impulse or a brake for the rolling Off, the guide rolls (21) and/or the central guide wheels (41) and/or the lower pressing cylinders (24 and/or 25) dependent upon the drawing off tension of the silage-folie (16).

22. Movable grouping system according to the claims 1, 2, 5, 6 or 9 to 11, 13 or 21 to 23, due to the fact that at the end of the guide tube (11) on both sides is mounted an upright press cylinder (42), mainly with tension springs and/or with a drive.

23. Movable grouping system according to claim 23, due to the fact that the guide tube (11) is provided with vibrators, mainly with lateral vibrating walls.

24. Movable grouping system according to the claims 15, 16 or 18, due to the fact that the machine frame (20) of the stuffing machine is equipped with a movable frame (25) to be coupled on with the mixer installation (50), already prearranged. On the machine frame. (20) is mounted the conveyor for charging (51) and the movable frame (52); and both frames (20 and 52) can be proceeded and driven together by a traction engine to be coupled on.

## Revendications

1. Disposition roulante pour la production d'un ensilage deposant sur le sol qui se conserve enfermé dans un plastique d'ensilage, avant tout d'un melange d'ensilages, avec une machine à fourrer (1) contenant une vis sans fin à fourrer (2) qui transporte le matériel d'ensilage à travers l'entrée d'un panneau à fourrer (1) debout, qui est reçu avec une mangeoire d'un dispositif d'alimentation (4) préréglé, dans laquelle le matériel d'ensilage est mis d'un outillage à charger (51), en particulier d'un convoyeur à charger. Avec cela, la machina à fourrer (1) porte le plastique en forme d'un tuyau souple plié (16), le panneau à fourrer entourant rétiré et au même temps la poussée à l'avance de la machine à fourrer rempli (1) avec le matériel de l'ensilage est stocké sur le sol (12) et le panneau à fourrer (1) montre un bord inférieur (13) parallel sous la rapport du sol plat (12) avec lequel elle est menée, en position de travail, proche du sol (12) et entourée d'un tuyau de guidage (11) latéralement et en haut qui, commençant sur la panneau à fourrer (1), va jusqu'à la zone à fourrer (15), **caracterisé par le fait qu'**un diviseur du plastique d'ensilage (10) est arrangé à la côté détournée du champ d'activité (14) dupanneau à fourrer (1), en haut au centre, arrangé sens inverse du dessous (17) du plastique de l'ensilage (16) et une partie du guidage est arrangée au bord inférieur (13) du panneau à fourrer (1), qui est placée au tuyau de guidage (11) des deux côtés sur laquelle est mené le dessous (17) du plastique d'ensilage (16), fendu en bas, qui est monté comme cylindre à bobiner (18) au-dessus du panneau à fourrer et/ou derrière ; avec cela, les deux côtés du dessous (17) du plastique d'ensilage (16) sont allongées sur le sol (12) sous l'ensilage y rempli.

2. Disposition roulante selon l'exigence 1, **caractérisée par le fait que** le tuyau de guidage (11), de qui le panneau à fourrer (1) est entouré latéralement et en haut, y commençant, il va, proportioné à la hauteur, un court bout de chemin d'un quart jusqu'à la moitié dans la zone à fourrer (15), si sur le panneau à fourrer (1) ne font saillie que l'aoutillage à fourrer. (3) à une vis sans fin à fourrer (2), en général y prenant fin.

3. Disposition roulante selon l'exigence 1, **caractérisée par le fait que** la vis sans fin à fourrer (2) du panneau à fourrer (1) est entourée de plusieurs outils à fourrer (31, 32, 33, 34) qui sont actionnés et, de préférence au-dessus et au-dessous arrangés, surtout un par un outil à fourrer (31, 33) central et deux autres outils à fourrer (32, 34) chaque fois arrangés latéralement et ajustés en angle droit vers la panneau à fourrer (1).

4. Disposition roulante selon l'exigence 3, **caractérisée par le fait que** les outils à fourrer (31, 32, 33, 34) sont formés comme des arbres, desquels les arbres latérals inférieurs (34) montrent un diamètre plus grand et les arbres supérieurs (31, 32) une longueur plus grande que les autres arbres (31, 32, 33 resp. 33, 34).

5. Disposition roulante selon l'exigence 1 ou 2, **caractérisée par le fait que** le tuyau de guidage (11), de qui le panneau à fourrer (1) est entouré latéralement et en haut, y commençant, proportionné à la hauteur, un long bout de chemin d'environ presque la simple hauteur jusqu'à la double va dans la zone à fourrer (15), si au-dessus du panneau à fourrer (1) au moins un outil à fourrer (31 ou 32 ou 33 ou 34) va dans le tuyau de guidage (11) sur une partie considérable de la longueur du tuyau de guidage (11), en particulier jusque plus de la moitié ou y est arrangé.

6. Disposition roulante selon l'exigence 1, 2 ou 5, **caractérisée par le fait qu'**au tuyau de guidage (11), en diagonale et horizontalement, est placé un outil à fourrer en forme d'une vis sans fin à condenser (35) propulsée, à des intervalles, devant la plaque à fourrer (1), vers l'hauteur au-dessous de la vis sans fin à fourrer (2).

7. Disposition roulante selon l'exigence 6, **caractérisée par le fait que** la vis sans fin à condenser (35) porte plusieurs doigts à transporter le amtériel de l'ensilage (36), déplacés en direction de la circonférence, qui sont posés, déplacés en spirales, vers l'axe de la vis sans fin à condenser (35) à des intervalles les uns les autres.

8. Disposition roulante selon une des exigences 1 à 3 ou 5 ou 6, **caractérisée par le fait que** la plaque à fourrer (1) est installée au-dessus de la vis sans fin à fourrer (2), horizontalement, et de là, incliné en angle escarpé, en bas diagonalement en avant.

9. Disposition roulante selon une des exigences 1, 2, 5 ou 6, **caractérisée par le fait qu'**au tuyau de guidage (11) est fixé, des deux côtés, comme partie de guidage une plaque de guidage (6) chaque fois, sur laquelle, au-dessous le dessous (17) du plastique de l'ensilage (16), fendu en bas, est menée, ou, comme partie de guidage, est arrangée chaque fois une roue du sol (37) qui se déroule sur le plastique de l'ensilage (16) et est positioné vers le d'roulement, surtout en dehors.

10. Disposition roulante selon une des exigences 1 ou 9, **caractérisée par le fait que** chaque partie de guidage montre un dispositif d'une traction de guidage (22), auquel la plaque de guidage (6) est installée consistant d'une entrée (23), de préférence déplacée vers le bord extérieur de la plaque de guidage (6) et arrangée proche sur la partie d'un arc (9), incorporée dans la partie d'afflux (7). Par l'entrée (23) sont fixés aux consoles des cylindres à pression (24, 25) chaque fois, de l'extérieur et de l'intérieur, arrangés déroulants, Au moins un de ces cylindres à pression (24, 25) est propulse électriquement ou hydraulique et ses axes sont ajustés parallèlement les uns avec les autres et, en substance, parallèlement à la partie d'afflux (7) de la plaque de guidage de la partie de guidage (6) d'en bas en intérieur incliné diagonalement en haut à l'extérieur, et dont le niveau de contact est situé au niveau extérieur (28) de l'entrée (23) et où, à une roue du sol (37) le dispositif d'une traction de guidage (22) est au moins prévu comme un cylindre à pression (24) propulsé placé à l'intérieur, ajusté d'en bas dedans diagonalement vers le haut en dehors, au bord inférieur du tuyau de guidage (11).

11. Disposition roulante selon une des exigences 1, 9 ou 10, **caractérisée par le fait que** la partie de guidage formé comme plaque de guidage (6) à côté du tuyau de guidage (11) est montée derrière le panneau à fourrer (1) variable à hauteur et latéralement et qui montre une partie d'afflux (7), en substance verticalement ou parallèlement arrangé, qui montre une partie d'écoulement (8) sur une partie d'un arc (9) s'étendante sous le bord inférieur (13) du panneau à fourrer (1), sur laquelle sont tirés les deux côtés du plastique de l'ensilage (16) coupés au dessous (17).

12. Disposition roulante selon l'exigence 1, **caractérisée par le fait que** du cylindre à bobiner (18) à la roue au sol (37 au bout inférieur du panneau à fourrer (1) un rail de guidage (38) roulant diagonalement en bas et en direction du panneau à fourrer (1), est monté come couche pour le plastique de l'ensilage (16).

13. Disposition roulante selon l'exigence 1, **caractérisée par le fait qu'**un d'coupeur du plastique (10) qui, central en haut, est arrangé de l'intérieur sens inverse du dessous (17) du plastique de l'ensilage (16) incliné en diagonale, consiste d'une lame qui coupe le plastique de l'ensilage (16), enroulé comme tube, en le coupant au dessous (17).

14. Disposition roulante selon une des exigences 1 ou 12, **caractérisée par le fait qu'**entre le cylindre à bobiner (18) et le plaque à fourrer (1), au-dessus et latéralement déplacé en dehors au tuyau de guidage (11), puis tiré en arrière, est installé à chaque côté un second dispositif de traction de guidage pour la zone supérieure du plastique de l'ensilage (16).

15. Disposition roulante selon une des exigences 1, 2, 5, 6 ou 9 à 11 et 13, **caractérisée par le fait que** le tuyau de guidage (11) en haut est, en substance, divisé central et les deux parties sont montées à coulisse au plaque à fourrer (1) ou au gode (20) de la machine à fourrer (1), latéralement, à l'angle droit vers la direction à fourrer (5), de préférence avec des moyens d'ajustage hydraulique.

16. Disposition roulante selon une des exigences 1, 12 ou 14, **caractérisée par le fait que** le cylindre à bobiner (18) du plastique de l'ensilage (16) est monté au porteur de cylindres (29) du socle de la machine (20) et que des cylindres de guidage (21) pour le plastique de l'ensilage (16) retiré sont subordonnés au cylindre à bobiner (18), des deux côtés à sa périphérie.

17. Disposition roulante selon une des exigences 1, 3, 5 ou 6, **caractérisée par le fait que** à deux côtés du plaque à fourrer (1) est arrangé, comme dispositif d'une traction de guidage supplémentaire, chaque fois une roue de guidage (41) central actionné, de préférence à l'arête latérale des boites de propulsion, sous un angle à la zone du tirage du plastique de l'ensilage (16) pour sa introduction.

18. Disposition roulante selon une des exigences 1, 9, 11 à 14 ou 16 à 17, **caractérisée par le fait qu'**un plastique du sol (39), mené centrale sous et entre le chassis (19), est déposé sous le plaque à fourrer (1) qui est tiré d'en rouleau (40), monté sous le sôcle de la machine (20), et sur qui les deux côtés latérales du dessous (17) du plastique de l'ensilage (16) sont reposées et roulées par-dessus des roues au sol (37).

19. Disposition roulante selon l'exigence 1.8 et une des exigences 1, 9, 11 à 14 ou 16 à 17, **caractérisée par le fait que** le dessous (17) du plastique de l'ensilage (16) et le dessus du plastique du sol (39) sont munis d'une couche collante, produite au moins avant qu'il soit roulé par-dessus.

20. Disposition roulante selon une des exigences 1, 3, 5, 6 ou 17, **caractérisée par le fait qu'**au champ d'activité (14) du plaque à fourrer (1) à sa périphérie, à des intervalles, sont installées des buses d'injection (30), pour le pressage d'une masse de couverture féculente, de préférence des grain concassés du mais pâteux, juste sous le plastique de l'ensilage.

21. Disposition roulante selon une des exigences 10, 16 et 17, **caractérisée par le fait qu'**au bout du tuyau de guidage (11), de préférence latéralement, sont installés des deux côtés un détecteur chaque fois pour la tension du tirage du plastique de l'ensilage .(16) qui retarde sur un contrôle électrique la propulsion ou un frein pour dérouler, les cylindres de guidage (21) supérieurs et/ou les roues de guidage (41) centrals et/ou les cylindres à pression inférieurs (24 et 25) en fonction de la tension du tirage du plastique de l'ensilage (16).

22. Disposition roulante selon une des exigences 1, 2, 5, 6 ou 9 à 11, 13 ou 21 à 23, **caractérisée par le fait qu'**au bout du tuyau de guidage (11), des deux côtés est monté chaque fois un cylindre à presser (42) debout, de préférence suspendu et/ou propulsé.

23. Disposition roulante selon l'exigence 23, **caractérisée par le fait que** le tuyau de guidage (11) est muni de vibrateurs, surtout avec des cloisons à vibrer latérales.

24. Disposition roulante selon une des exigences 15, 16 ou 18, **caractérisée par le fait que** le socle de la machine (20) de la machine à fourrer est installé avec le cadre roulant (52) de l'organisme mélangeur (50) préréglé coupable, sur qui l'installation de transport à charger (51) est montée et le cadre (52) et le sôcle del la machine (20) peuvent être coulissant et propulsés ensemble d'véhicule à tirer attelable.
